# EUROPEAN PATENT APPLICATION

(11) **EP 2 287 019 A1**
(43) Date of publication of application: **23.02.2011**
(21) Application number: 10173116.4
(22) Date of filing: 17.08.2010
(51) Int. Cl.: B60C 23/00, B60C 23/04

(54) **Tire status display system for a cargo trailer**

(30) Priority: 19.08.2009 US 543567
(71) Applicant: The Goodyear Tire & Rubber Company, Akron, OH 44316-0001 (US)
(72) Inventor: Shepler, Peter Ross, Stow, OH 44224 (US); Benedict, Robert Leon, Tallmadge, OH 44278 (US); Lettieri, Joseph Carmine, Hudson, OH 44236 (US); Umstot, Dale Edward, Atwater, OH 44201 (US); Crano, Richard Nicholas, Akron, OH 44321 (US)
(74) Representative: Kutsch, Bernd

(57) **Abstract**

The invention discloses a trailer (48) having a cargo containment body supported by a plurality of wheel units, each wheel unit having a mounted tire (52); and a tire status display unit (70) externally mounted to the trailer (48) and operative to communicate a visible trailer tire inflation pressure status indicia, the display unit (70) mounted to a forward end of the trailer at a mounting location operatively visible to an operator of a tractor (50) during coupled operation of the tractor (50) and the trailer (50).

## Description

### Field of the Invention

The invention relates generally to a tire monitoring system for vehicles and, more specifically, to a tire monitoring display system for multi-wheeled vehicles such as in tractor-trailer applications.

### Summary of the Invention

The invention relates to a system in accordance with claim 1.

Dependent claims refer to preferred embodiments of the invention.

According to one aspect of the invention, a multi-tire trailer and display system includes a trailer having a cargo containment body supported by a plurality of wheel units, each wheel unit having a mounted tire; a tire status display unit externally mounted to the trailer and operative to communicate a visible trailer tire inflation pressure status indicia, the display unit mounted to a forward end of the trailer at a mounting location operatively visible to an operator of a tractor during coupled operation of the tractor and the trailer. In another aspect, the display unit has a display panel operatively illuminated for visibly communicating the inflation status of the trailer tires and the display panel may communicate changes in the inflation status of the trailer tires by differentiated colored light emission.

The display unit mounting location may be at an elevated position mounted to a forward end of the trailer so as to be operatively visible by means of a rear-view tractor mirror to an operator of a tractor coupled to the trailer as well as ground personnel.

In yet another aspect, the system includes a tire inflation pressure monitoring device mounted to measure tire inflation pressure of a respective tire and transmit measured tire inflation pressure data; an antenna operative to receive the measured tire inflation pressure data from the tire monitoring devices and communicate the received measured tire inflation pressure data to a data processing unit. The data processing unit receives tire pressure measurement data from the trailer tires and controls the illumination of the display unit attached to the trailer.

### Brief Description of the Drawings

The invention will be described by way of example and with reference to the accompanying drawings in which:
FIG. 1 is a perspective view of a wheel unit component of the subject system.
FIG. 2 is a perspective view of a wheel unit mounted to a wheel rim.
FIG. 3 is a perspective view of a tire pressure monitoring system electronic control unit (ECU).
FIG. 4 is a perspective view of an antenna unit component of the subject system.
FIG. 5 is a plan view of a driver-viewed display unit employed is a tractor truck application.
FIG. 6 is a schematic of a system configured pursuant to the invention.
FIG. 7 is a schematic representation of a system employing a drive over reader.
FIG. 8 is a perspective view of a tractor trailer deploying a trailer-based visual display unit.
FIG. 9 is a schematic representation of an alternative system employing telematic transmission of data to a remote receiver.

### Detailed Description of the Invention

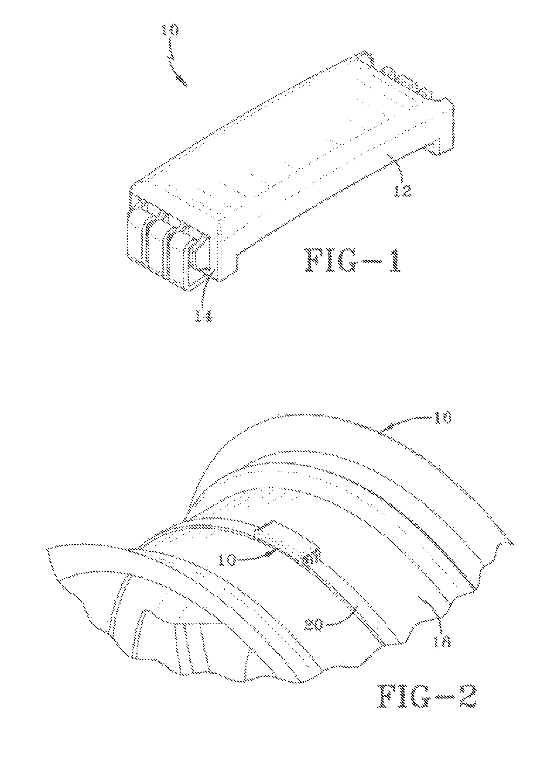

Referring to FIG. 1, the subject tire pressure monitoring system for commercial truck application is configured from multiple components including one or more wheel-based sensor units 10 that measures pressure and/or temperature of a tire and transmits pressure, temperature, and wheel unit identification to an antenna unit. The sensor units 10 are of a type commercially available and are battery powered and configured having a casing 12 formed of suitably durable material and including support flanges 14 at opposite ends.

The units 10 are mounted to a respective wheel rim 16 by a strap 20 that is positioned to circumscribe a central region 18 of the rim. The unit 10 may be mounted to the rim prior to mounting a tire. So mounted at region 18, the unit 10 is exposed to the interior of the tire mounted to the rim and is operatively located to measure the temperature and air pressure within the tire cavity. The device 10 may include programmable memory into which the wheel unit identification number can be stored for subsequent access as required.

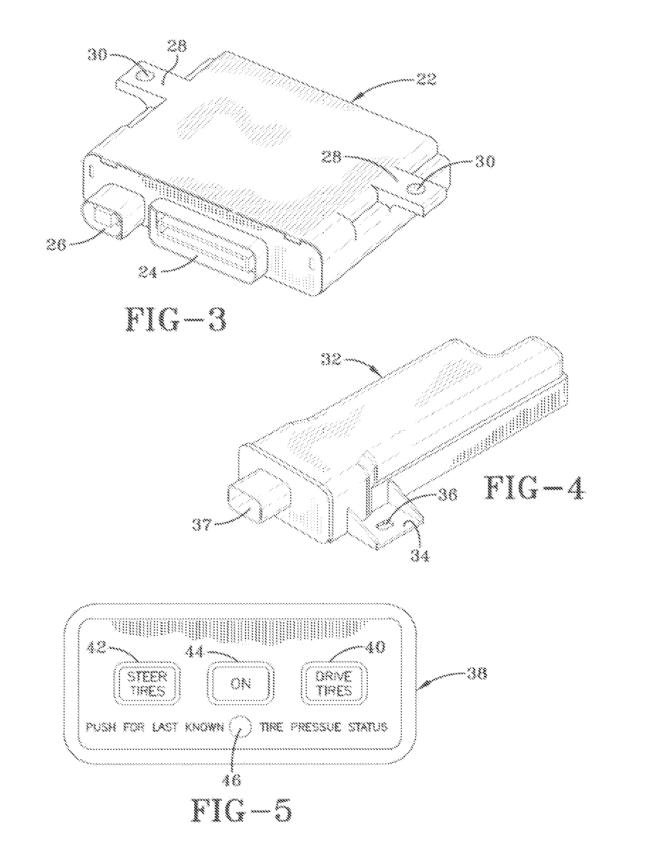

A second component 22 utilized in the system is shown in FIG. 3. One or more tire pressure monitoring system electronic control units (ECU) 22 are configured having interface connectors 24, 26 that connect with circuit board(s) (not shown) within the ECU22. Each ECU 22 has a pair of mounting flanges 28 extending from opposite sides, each flange 28 having a centered mounting aperture 30. The ECU is of a type commercially available and operably hosts system functions/ intelligence within the system. The flanges 28 and mounting apertures 30 facilitate a chassis mounting of the ECU to a trailer chassis.

An antenna unit 32 constitutes a further system component as shown in FIG. 4. It is contemplated that multiple antenna units 32 will be utilized in a vehicle implementation. Each antenna unit 32 mounts to a chassis by means of flanges 34 and mounting apertures 36 in a position from which to operably communicate with a respective wheel unit component 10. Each antenna unit 32 comprises a smart radio frequency (RF) antenna/receiver of a type commercially available and connects by means of wireless transmission or hard wire transmission with an ECU 22 through connector interface 37.

FIG. 5 illustrates a display unit 38 suitable for mounting within the cab of a vehicle such as a commercial tractor. The display unit 38 has separate visual indicia for each group or zone of tires being monitored; for example as shown, the status of drive tires are communicated visually by indicator 40 and the steer tire zone is communicated by means of indicator 42.

An "on" button 44 activates the unit 38 for initial operation and a button 46 is provided to activate on demand to initiate a sensor reading of the tire status within each tire zone. The in-cab display thus provides an automatic tire identification by axle group; continually monitors tire health and warns the driver of problems. The readiness function allows the driver/maintenance to get the status of tire health with a touch of the button 46. Telematics of data reflecting tire status and health may be used to transmit data continuously to a fleet data processor, if desired, whereby allowing tire health to be monitored continuously.

The "on" button 44 may be color coded by LED illumination or other known devices to visually show a steady green light, for example, to indicate the system is working. The drive and steer indicators 40, 42, respectively may be off to indicate no problem is being detected. The readiness button 46 may be depressed for maintenance operations. When the sensors within a zone (e.g. an axle) of tires detects that the axle has tires that are a preset percentage below recommended cold pressure, say, for example, ten (10) percent, the indicator lights 40 and/or 42 may be made to emit a steady yellow light. When the tires within a zone (axle) are at a greater percentage below recommended cold pressure (e.g. 20 percent), the light emitted from indicators 40, 42 may change to a steady orange. Still further, the lights 40, 42 may be configured to blink to indicate a system malfunction in the drive or steer tire axle tires, respectively.

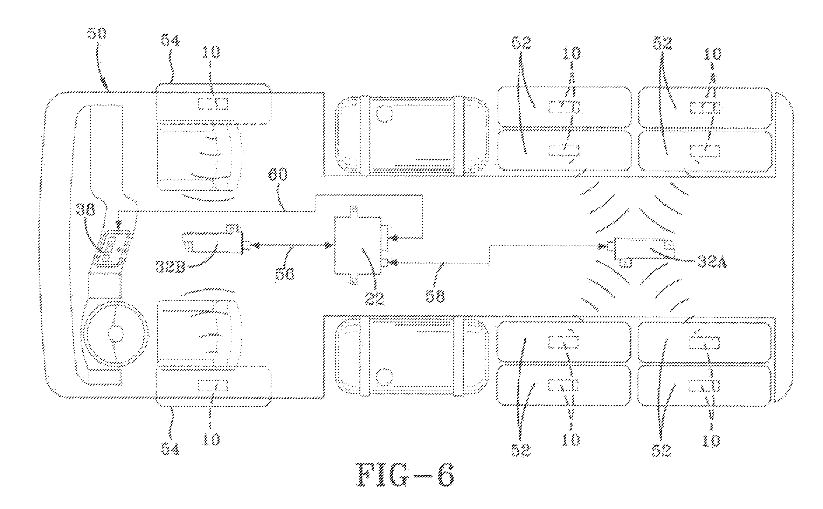

FIG. 6 shows in schematic form one implementation of the subject invention for a commercial tractor. A tractor 50 is equipped with eight drive tires 52 in a tandem axle configuration and two steer tires 54, respectively. A communication link 56 extends between a front-mounted antenna unit 32B and an ECU Tire Pressure Monitor 22 and a rear-mounted antenna unit 32A communicates with the Monitor 22 by means of communication link 58. The ECU Tire Pressure Monitor 22 is connected via link 60 to a display unit 38 mounted within the cab of the tractor 50 so as to be visible to an operator of the unit. Each of the drive wheel units 52 has a tire equipped with a wheel unit sensor unit 10 that measures tire pressure and communicates pressure by transmission to the antenna unit 32A which, in turn, relays the data to the ECU Monitor 22. The ECU Monitor 22 analyzes the data and displays by, preferably, color coded actuation, tire pressure status information to the user by means of display 38 as described previously. It will be appreciated that the antenna unit 32A services an axle zone comprising a plurality of drive wheel units 52, each having one or more tire pressure sensor unit(s) 10. Accordingly, a user may ascertain from display 38 by drive axle zone the pressure status of tires within such zone.

Similarly, the antenna unit 32B services an axle zone comprising a plurality of steer wheel units 54, each having one or more tire-based pressure sensor unit(s) 10. Information from such units is communicated to antenna unit 32B and therefrom to the ECU Monitor 22. A user may ascertain from display 38 by steer axle zone the pressure status of tires within such zone. The user will thus be able to discern by zone whether the tires within a zone are all properly inflated or whether one or more tires is in an under-inflated condition requiring remedial action.

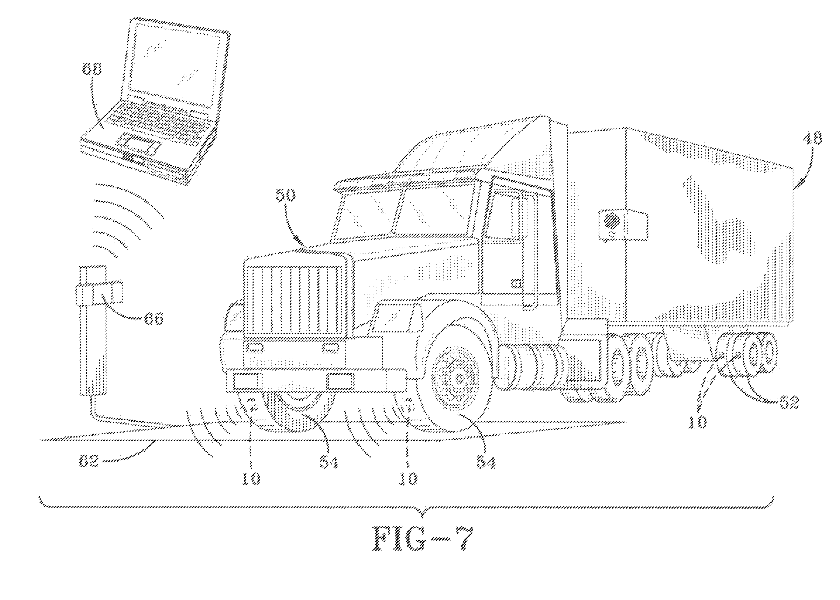

FIG. 7 illustrates a read station in which the tire pressure sensor units 10 may be read as a truck (either a box truck or a tractor trailer as shown in FIG. 7) pass through the station. An antenna loop 62 is situated within a read station and includes electrical interconnections 54 to a receiver/transmitter 66. The antenna loop 62 may be buried or situated on a pad within the station. One or more antenna loops 62 may be located within the station in series. The antenna loop(s) 62 are located such that the tractor trailer 48, 50 passes over the loop within the station and thereby allows the wheel unit sensor units 10 to transmit data to the transceiver 66. The transceiver 66 can through wired or wireless transmission transmit such data to a processor such as computer 68. The processor 68 can thereby accept and process data relating to tire inflation status, tire identity, and vehicle identity while the tractor trailer moves through the station. The operator of the tractor can therefore be accessing and assessing the status of tire pressure from the cab of the tractor as described previously while the data is communicated through transceiver 66 for data storage and processing by computer 68.

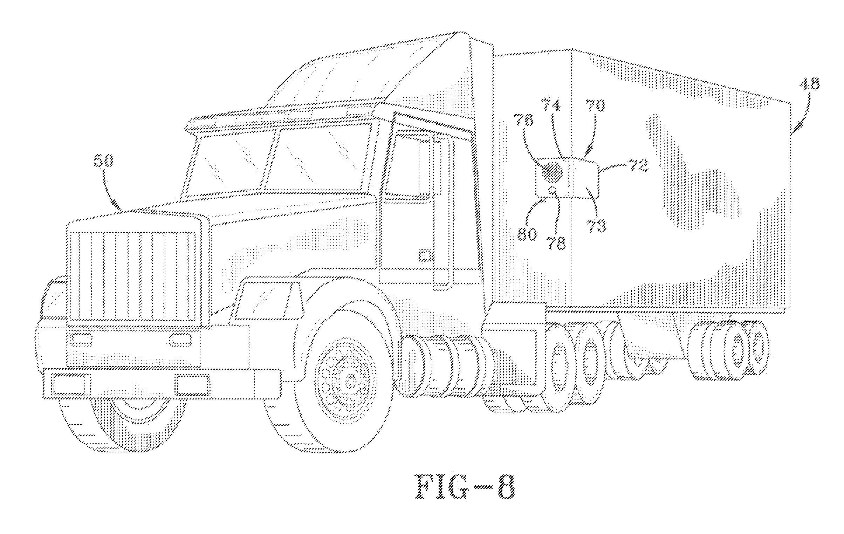

A visual tire status indicating display 70 may be mounted to the trailer unit to all the status of tires on the trailer 48 to be visually communicated while the trailer is connected to the tractor 50 and while the trailer 48 is disconnected. The display 70 is mounted to an external surface of the trailer 48 in a location preferably visible to the operator of the tractor 50 from the cab and from the ground such as by maintenance personnel. The display 70 in FIG. 8 consists of an L-shaped mounting bracket 72 that attaches by suitable means to a forward corner of the trailer 48 at a height visible to the operator through the rear mirror of the tractor 50 and to a person situated along side the trailer. A second display unit 70 may be mounted to the opposite forward corner of the trailer if so desired.

The bracket 72 is configured having a side panel 73 extending along a side of the trailer 48 and a forward directed front panel 74. The panels 73, 74 intersect at right angles to form the bracket 72. Secured to the front panel 74 is a display 76 comprising light emitting devices such as LED's. The display 76 may further be configured to include electronic devices that are selectively activated to emit light of different colors, depending on the status of the tires in the trailer unit. The external display 76, being positioned on the nose portion of the trailer, is visible from the driver's rear view mirror. The display 76 visually indicates the monitored tire status and warn the driver of problems in tire inflation. An "on" button 78 may be positioned to reflect the on status of the system. A readiness function is achieved by activation of a button 80 positioned adjacent the display 76. The readiness function allows the driver or maintenance associate to get a visual indication of the last reported tire status report with a push of the button 80.

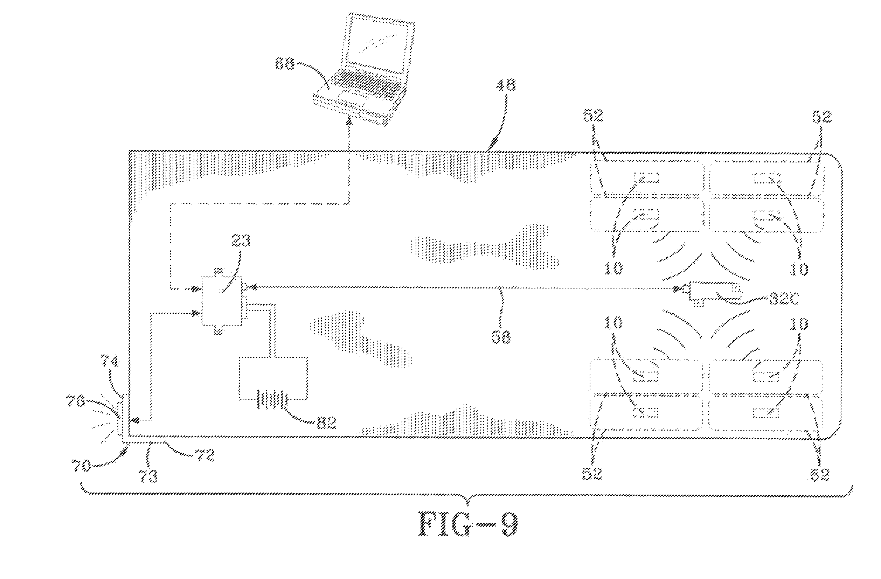

As shown in FIG. 9, the ECU monitor control unit 22 may be powered by a battery 82 and is wired to the display 76. The inflation status of tires 52 is measured by the wheel unit component 10 for each tire and transmitted to the antenna unit 32 assigned to each tire zone. From the antenna 32C the data is transmitted to the ECU control unit 22 and may, if desired, be communicated by telematics to a remote data processing unit 68. A record of tire inflation status and tire identification may thereby be preserved for fleet management. In addition, a visual indication of the status of the tires may be transmitted to the display 76 from the ECU unit 22 to indicate tire status to a driver and/or ground maintenance personnel.

The display 76 and on button 78 may be configured to emit light of different colors to indicate status. For example, without limitation intended, the "on" button 78 may emit a steady green light to indicate the system is working and no light if the system is not. No light emitted from display 76 may indicate the absence of a problem with the tires of the trailer unit. A yellow light emitted from the display may indicate that one or more tires is a preset percentage (e.g. 10 percent) below recommended cold tire air pressure. An orange display light may indicate that one or more tires within a zone is a preset greater percentage (e.g. 20 percent) below recommend pressure. A blinking display 76 or "on" button 78 may indicate a malfunction on the trailer or within the trailer monitoring system.

The reported pressures of tires within each tire zone are preferably temperature compensated for improved accuracy of the tire inflation status measurement. The function of the trailer monitoring system is coupled from the ECU 22 to the display 38 within the cab of the tractor by telematic transmission to allow the driver to visually monitor trailer tire zone status with the monitoring of tractor tire zone status.

Depressing the readiness button 46 may initiate a system display of the status of tires based on data collected within the time period in which the tractor or trailer is parked. The data received from the sensor(s) within each tire may be temperature compensated to ensure the accuracy and legitimacy of warnings conveyed by the light signals emitted from indicators 40, 42.

The system described previously consists of pressure/temperature sensors, antennas, an electronic control unit (ECU) and a telematics unit. Typically a sensor module will be assigned and operatively mounted for each tire. An antenna is assigned for each region or zone on the vehicle such as drive, steer, and trailer tires. Preferably there will be at least two ECU's and two telematics units, one each for the tractor and one each for the trailer.

The pressure/temperature measurements are transferred wirelessly from the wheel unit sensor to the antenna and on to the ECU and then to the telematics unit. The information is then sent to the fleet operator or other maintenance facility. Normally this information would not be displayed for the driver or local maintenance personnel but it may be done if so desired. The tire information provides local information for the driver or local maintenance personnel. For this, the tractor trailer tires are grouped into three zones. The first two zones are steer and drive for the tractor and the third zone is the trailer tires.

The tractor display is mounted on the interior dash and includes three indicators. One is to indicate that the system is on and functioning properly. The other two indicators are for the inflation status for the tires in the steer and drive zones. The display for the trailer is mounted on the front corner of the trailer so that it is visible in the driver's rearview mirror. Two indicators are present for the trailer display; one for the system status and the other for the inflation status of the trailer tires. Each display also has a readiness button that can be used to query the last known inflation status for the tires in the zones monitored by that display unit. This allows for a check on the tire status for the trailer before it is loaded and for the tractor before it leaves the terminal.

In one embodiment, a microcontroller is within the display rather than in the ECU. An advantage of placing local intelligence in the display module is that display behavior can be changed without reprogramming the system ECU. A communications port may be added to the display and use its local intelligence to filter and format data communication to telematic or other systems. In this manner, specific interfaces for drivers and telematics solutions can be delivered without changing system ECU programming.

The system thus monitor the condition of the tires on the tractor unit as well as the trailer unit and conveys measured data to a fleet operator or maintenance facility. The information is further used to provide the operator and local maintenance personnel with tire status by means of a display within the cab of the tractor and a display mounted to the trailer.. Measured tire parameters may include monitoring the pressure or temperature within each tire utilizing a pressure/temperature sensor mounted to the tire or wheel rim. One or more sensor module is employed for each tire. The pressure/temperature measurements from each tire are transferred wirelessly from the wheel unit sensor to an antenna and on to a processing unit such as the vehicle electronic control unit (ECU) and/or a microcontroller within each display unit. From the ECU, the data is transferred to a telematics unit.

The system preferably deploys a sensor module for a group or region of tires. A separate first display within the cab of the tractor communicates the status of tractor drive and steer tires to the operator while a second display unit mounted to the trailer communicates the status of trailer zone tires to the operator visually by means of a rearview mirror. The sensor(s) from each tire within a group or region transmits data. The grouping of tires may be, for example, the tires of the tractor and a second or third group for the trailer. An under inflated tire on either the tractor or the trailer may be identified and a warning provided to the driver through first and second display units. Such information allows for corrective action to be taken before it becomes a safety issue. Running with properly inflated tires increases fuel economy and decreases treadwear. Properly inflated tires provide better vehicle handling and increased tire durability.

The system eliminates the need to conduct a teaching procedure that registers, and registers with each tractor/trailer change, each sensor and its wheel position from a tractor and trailer in the ECU. The system eliminates the need to reregister each tire if any tires are replaced or their positions rotated and avoids system failure resulting in a failure to properly identify each tire. The system in avoiding the need for repetitive teaching procedures to teach the system which tires are in use and where; saves time and avoids the need for additional equipment. In so doing, the system improves efficiency and reduces costs associated with the operation of a commercial trucking fleet.

## Claims

1. A multi-tire trailer and display system comprising:
a trailer (48) having a cargo containment body supported by a plurality of wheel units, each wheel unit having a mounted tire (52);
a tire status display unit (70) externally mounted to the trailer (48) and operative to communicate a visible trailer tire inflation pressure status indicia, the display unit (70) mounted to a forward end of the trailer at a mounting location operatively visible to an operator of a tractor (50) during coupled operation of the tractor (50) and the trailer (50).

2. The trailer and display system according to claim 1, wherein the display unit (70) comprises a display panel (76) operatively illuminated for visibly communicating the inflation status of the trailer tires.

3. The trailer and display system according to claim 2, wherein the display panel (76) operatively communicates changes in the inflation status of the trailer tires at least partially by differentiated colored light emission.

4. The trailer and display system according to at least one of the previous claims, wherein the display unit mounting location is at an elevated position operatively visible by means of at least one rear-view tractor mirror to an operator of a tractor coupled to the trailer during coupled tractor and trailer operation.

5. The trailer and display system according to at least one of the previous claims, wherein the display unit (70) includes a substantially L-shaped mounting bracket (72) operatively mounting to a forward corner location of the trailer at the elevated position.

6. The trailer and display system according to claim 1, further comprising:
a plurality of tire inflation pressure monitoring devices (10), each device mounted to operatively measure tire inflation pressure of a respective tire and transmit measured tire inflation pressure data;
at least one antenna (32A, 32B, 32C) operative to receive the measured tire inflation pressure data from the tire monitoring devices (10) and to communicate the received measured tire inflation pressure data to a data processing unit;
wherein the data processing unit is coupled to the display unit for operatively controlling the display unit to generate a visible trailer tire inflation pressure status indicia appropriate to the measured tire pressure inflation data.

7. The trailer and display system according to claim 6, wherein the display unit comprises a display panel operatively illuminated for visibly communicating the inflation status of the trailer tires.

8. The trailer and display system according to claim 7, wherein the display panel communicates changes in the inflation status of the trailer tires at least partially by differentiated colored light emission.
